# EUROPEAN PATENT APPLICATION

(11) **EP 0 656 581 A1**
(43) Date of publication of application: **07.06.1995**
(21) Application number: 94480109.1
(22) Date of filing: 26.10.1994
(51) Int. Cl.: G06F 3/12

(54) **Method and apparatus for optimal network printer selection**

(30) Priority: 01.12.1993 US 160987
(71) Applicant: INTERNATIONAL BUSINESS MACHINES CORPORATION, Armonk, NY 10504 (US)
(72) Inventor: Salahshour, Abdolreza, Keller, TX 76248 (US); Williams, Marvin L., Lewisville, TX 76067 (US)
(74) Representative: Lattard, Nicole

(57) **Abstract**

On a network, a list of optimal printer units for printing output of a job located on a data processing system is provided to the data processing system. A request for a list of optimal printer units is made at the data processing system upon the initiation of a print command. Printer units on the network are ranked relative to each other based on proximity to a specified location on the network, relative speed in which the output of the job can be printed, and compatibility of printer units with the output of the job. A specified number of top ranked printer units are displayed on the data processing system as optimal units. A selection of a printer unit is received and the output of the job is transmitted to the selected printer unit for printing.

## Description

The present invention relates to methods and apparatuses for routing printing jobs of a computer on a data processing system network.

Data processing systems networks often have interconnected computers and printers located across the network. In a large network, computers and printers may be distributed between several buildings on several floors of each building, and in several rooms on each floor of a building. Each computer may be located closely proximate to some printers, intermediately proximate to other printers, and remote from still other printers. For example, a computer may be located in an office on the same floor as rooms in which printers are located. The same computer may be located on a different floor from other printers located in the same building. Still other printers may be located in different buildings than the building in which the computer is located. The computer can access all of these printers through the network.

Users of computers on a network having a file to print frequently desire to have the file printed quickly at a location near their computer. Often, however, upon sending the file to a nearby printer, the user may find that several other printing jobs are already queued at that printer and that the file will take a long time to print. The computer user has the option of waiting for the file to print at that printer or searching for a different printer.

If the computer user is in a hurry to print the file the user typically looks for the shortest current print queue at other nearby printers capable of printing the file's output datastream. This task entails the user searching through routing and hardware statistics for each printer to find the most available local printer. However, in order to perform such a search, the user must know the names and locations of all the nearby printers. Typically, the printer names are long and difficult to remember, rendering the search more troublesome. Even if the printer names and locations are known, the manual search for a readily available printer is cumbersome and can take much time.

It is therefore an object of the present invention to provide a method and apparatus for automatically determining and displaying a list of the closest networked printers to a computer on a network, which printers have the shortest waiting times and fastest print completion estimates for a file to be printed from the computer.

A method of and network for providing a selection of optimal printing units from a plurality of printing units that are part of a network is provided. The location of a data processing system on the network is determined. Then, the relative proximity of each printing unit on the network to the location of the data processing system is determined. A projected time of completion of printing output of a job is also determined for each printing unit. A list of optimal printing units is then provided to an interface indicating the printing units capable of rapid completion of the job on the data processing system at a location proximate to the data processing system.

In accordance with one aspect of the present invention, the determination of the projected time of completion for printing includes determining a rate of printing for each of the printing units and determining a time required to complete printing of a queue of existing jobs at each of the printing units. The projected time of completion for printing the job is determined from the rate of printing and the time required to complete printing of queues.

In accordance with another aspect of the present invention, the printing units are ranked according to predetermined criteria in the list that is provided to the interface. The printing units may be ranked according to the determined proximities of the printing unit and also in accordance with the determined projected times of completion. In accordance with another aspect of the present invention, a user can provide an input location, wherein the determination of relative proximities of the printing units will be determined in accordance with the provided input location.

The present invention provides a list to the user of those printers that are capable of printing the data. With the present invention, when a network user wishes to print data or a job on a printer, the user may make an intelligent choice of which printer on the list to utilize. The list ranks the printers in accordance with predetermined criteria, such as closeness of the printers to the user's location, speed of the printers and availability of the printers. The user may provide the location of the user's own workstation, or some other location to use as a reference for determining the closeness or proximity of printers. With the present invention, the user need not remember the names and locations of printers and instead may concentrate on other tasks. In addition, the user need not know if a printer is capable or compatible with the type of data that is to be printed. Furthermore, the user need not know the image or minute processing speed of different available printers.

Fig. 1 is a schematic diagram of a data processing system on which the present invention can be practiced.

Fig. 2 is a flow chart showing the method of preparing and displaying a list of optimal printers for printing a job located on a data processing system.

Fig. 3 is a table showing information about printers located on a data processing system network.

Fig. 4 is a table showing information about estimated times of printing a job for printers located on a data processing network.

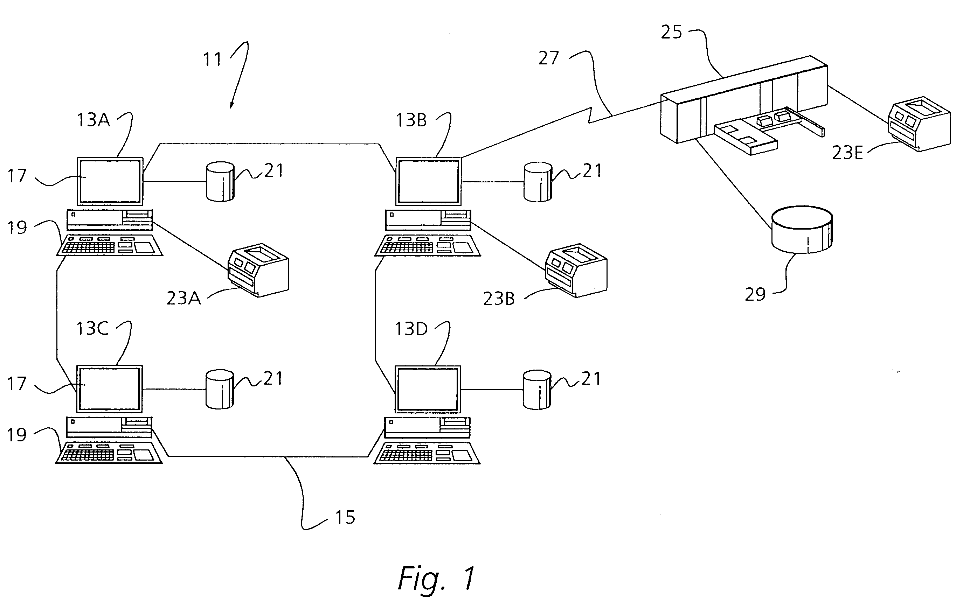

In Fig. 1, there is shown a schematic diagram of a network 11 of plural data processing systems, upon which the present invention can be practiced. The network 11 includes plural individual data processing systems, computers or workstations 13A, 13B, 13C, 13D which are connected together in a local area network (LAN) 15. Each workstation 13A-13D includes a user interface, which has a display screen 17 and a keyboard 19. Each workstation may also be coupled to a storage device 21 and to a printer or output device 23A, 23B. One or more of such storage devices 21 may be utilized, in accordance with the present invention, to store applications or resource objects which may be periodically accessed by any user within the network 11. Plural printers 23A, 23B are utilized, with each printer 23A, 23B being accessible to any user on any workstation within the network 11.

The network 11 may also include a mainframe or host computer 25 that is coupled to one of the workstations by a communication link 27. The computer 25 may serve as a network server. The host computer 25 may also be coupled to a storage device 29 which may serve as a remote storage for the workstations 13 and to a printer 23E.

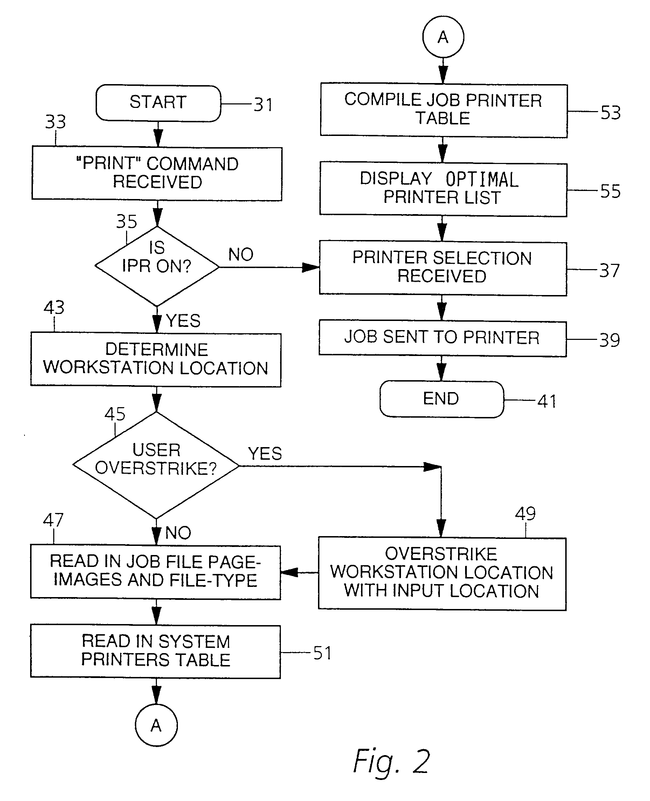

In Fig. 2 a flow chart is shown. In the flow chart, the following graphical conventions are observed: a rectangle for either a process, function or screen display, a diamond for a decision; and a circle for a connector in exiting to or entering from another part of the flow chart. These conventions are well understood by programmers skilled in the art of user interfaces and the flow chart is sufficient to enable a programmer skilled in the art to write code in any suitable computer programming language, such as BASIC, PASCAL or C for a computer such as the IBM Personal System / 2 (PS/2) family of computers which supports these languages. (IBM and PS/2 are trademarks of International Business Machines Corporation.)

Each of the networked workstations 13A-13D may send output to be printed from the workstation to any of the printers 23A, 23B, 23E connected to the network 11. The workstation may be physically located a proximate, intermediate, or remote distance from a printer 23A, 23B, 23E. For example, the workstation 13A may be located on a particular floor of a building. The workstation 13A would be located proximately to the networked printer 23A, which printer could be located in the same office of the building. The same workstation 13A may be located intermediate from another printer 23B, which printer could be located on another floor of the same building. The workstation 13A could be remotely located from another printer 23E, which printer may be located in another building.

Typically several factors affect a workstation user's selection of a specific printer on the LAN to print a job. One factor is compatibility of the printer with output from the job to be printed. The printer must be capable of accepting the output datastream from the job. For example, if the data to be printed contains graphical information, then the printer must be capable of printing such graphical information. Some printers are capable of printing only textual information. Another factor is physical proximity of the printer to a convenient location for the user to retrieve the printed output. Still another factor is the time required to complete printing of the job since the workstation user typically desires the job to be printed quickly. The time required to print a job may vary from printer to printer based on the number of jobs queued at each printer, and on relative printer speed.

Based on the factors above, the method shown in the flow chart of Fig. 2 determines and displays a list of optimal printers for rapid completion of a printing job at or near a specified physical location. The displayed list of printers enables a workstation user to select a printer on the network that will complete printing the output of the job rapidly near a preferred physical location.

The method is executed on individual workstations so as to allow users the choice of implementing the intelligent printer router. Alternatively, the method may be implemented on the host computer 25. The method is started upon startup and initiation of the computer, step 31. The method then waits for receipt of a "print" command. The workstation user initiates a job printing sequence by selecting a "print" command to print a job or information located on the workstation. The "print" command is provided by mouse, a keyboard 19, or other input device. The "print" command is received from input device, step 33. Upon receipt of the "print" command, the method determines whether the intelligent printer router of the present invention is on or otherwise enabled, step 35.

The workstation user may desire that the intelligent printer router be turned off if the user already knows which printer the job is to be routed to. The printer router may be turned off as a printing option in the "print" command entered by the workstation user. The result of step 35 is NO, if the intelligent printer router is off. The workstation then receives a printer selection from the workstation user by way of an input device, step 37. The output of the job is sent to the printer selected in step 37, step 39. The method then terminates, step 41. The selected printer then prints the job. As an alternative to step 41, the method can loop back to step 33 to await another "print" command.

The intelligent printer router of the present invention may be turned on by selection as a printing option in the "print" command entered by the workstation user. The result of step 35 is YES, if the intelligent printer router is on. The method then determines the physical location of the workstation that issued the "print" command, step 43. The workstation location is determined to enable the intelligent printer router to determine which printers 23A, 23B, 23E on the network are located near the workstation.

The method may obtain the location of the workstation 13A-13D from an address book located on the network 11. The address book correlates specific workstation users with particular physical locations. For example, if workstation user A has an office A having workstation 13A located therein, then the address book will correlate workstation 13A with workstation user A and office A. In one embodiment, the address book may be maintained and updated by a system administrator. In another embodiment, the address of a user is entered into the address book in response to a prompt. The intelligent printer router prompts the user to enter a workstation location and a user identification to be stored in the address book if a user's location cannot be found in the address book. No prompt is given by the intelligent printer router if the user's location is found by the printer router in the address book.

Even if the workstation location is provided in the address book, the user may wish to specify another workstation location. In step 45, the method determines if the user provides an overstrike. An overstrike overrides the workstation location that is determined by the intelligent printer router in step 43. The workstation user may desire that the output of a job be printed on a printer 23E located remotely from the workstation 13A. For example, it may be convenient for the workstation user to pick the printed output up at the remote printer or the workstation user may want to send the output to a person located near the remote printer. The user may input a desired location overstriking the location determined by the printer router in order to cause the printer router to locate and display optimum printers at a different location than the location determined by the printer router.

If the result of step 45 is YES, then in step 49 the method replaces the workstation location that was determined in step 43 by the intelligent printer router with the printer location input provided by the workstation user. The printer router will determine and display a list of optimal printers near the specified location. The method then proceeds to read in the file page/image and file-type data, step 47.

If the result of step 45 is NO, then the workstation user did not overstrike the workstation location that was determined by the intelligent printer router. The printer router will determine and display a list of optimal printers near the workstation. The method immediately proceeds to read in the file page/image and file-type data, step 47.

The method reads in the file page/image and file-type data of the job in step 47 to determine the length of the job to be printed, and to determine the type of output generated by the job. The file page/image and file-type data are read from the job file to be printed. The file page/image data indicates the length of the output to be printed. For example, the file page/image data may be reported as a specified number of formatted pages to be printed. The file-type data indicates the type of output generated by the job. The file-type data, in conjunction with data about a printer, enables the intelligent printer router to determine the compatibility of the printer with the output datastream of the job. The types of files indicated by the file-type data may include LIST 3820, LISTPS, ADMGDF, and DOC files.

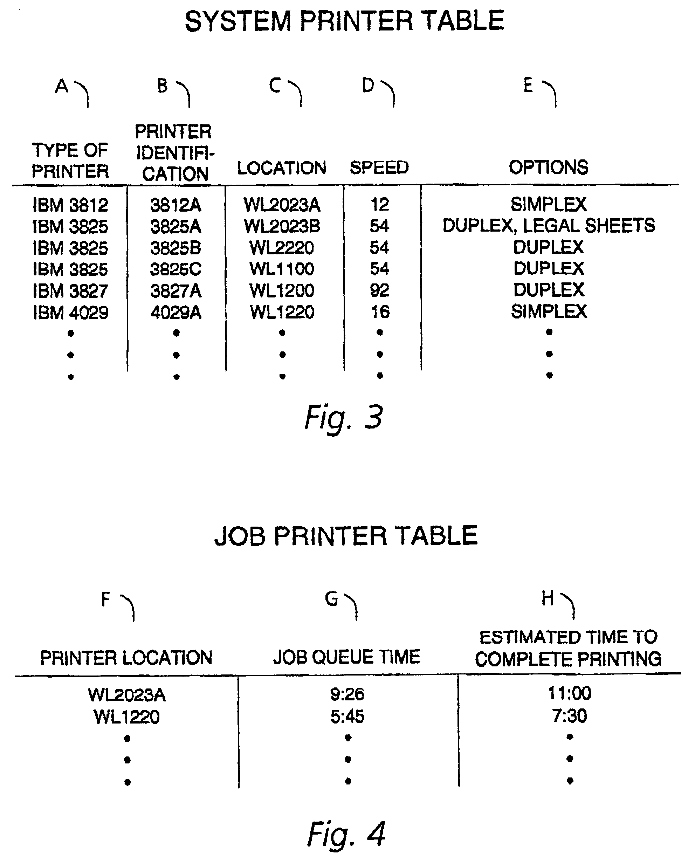

As shown in Fig. 3, the method then reads in a System Printer Table from the network 11, step 51. The System Printer Table provides information regarding the printers on the network. The System Printer Table is a database that is maintained and updated by the system administrator.

Each entry in the System Printer Table provides identifying information on a specific printer. Each entry includes: the printer type; the printer identification; the physical location of the printer; the speed of the printer; and printer options. The type of printer indicates the general model of the printer, for example, IBM 3812, IBM 3827 and IBM 4029 printers. The type of printer may determine the speed of the printer as well as options available on the printer. The type of printer is stored in the "Type of Printer" field, column A of the System Printer Table.

The identification of each printer is stored in the "Printer Identification" field, column B. The printer identification may be the printer name, or as shown in Fig. 3, a common shorthand name given to identify the printer.
In one embodiment, both the printer name and the printer identification are stored in the System Printer Table to provide identification of the printer.

The location of each printer is stored in the "location" field, column C. The intelligent printer router uses the location information to determine the proximity of each printer to the desired printing location. Typically, the location of the printer will identify the room, floor and building the printer is located in. Further information, such as a section of a floor where the printer is located in, or a group of buildings, or even a particular city or state where the printer is located, may also be provided.

The speed of the printer is stored in the "speed" field, column D of the System Printer Table. The intelligent printer router uses the information about the printer speed to estimate the length of time each printer will require to print a queue of jobs already at that printer and the time required to print the job to be output from the workstation. The printer speed may vary according to the type of printer. For example, the IBM 3812 prints at 12 images per minute while the IBM 3827 prints at 92 images per minute. Other printers, such as dot matrix printers, may print at various speeds depending on the quality of print desired.

The printer options are stored in the "printer options" field, column E. The intelligent printer router surveys the printer options to determine if the printer is capable of accepting the output datastream of the job to be printed, and therefore is compatible with the printer. The communication link type between the workstation and printer is set by the printer options. For example, the printer options may be set to a simplex or a duplex type communication link. The output datastream of the job to be printed must correspond to the communication link type in order for the printer to be compatible with the output.

The type of paper the printer is set to print may also be included in the printer options. For example, the printer may be set up to run legal size sheets only, or letter size sheets only, or other sheet sizes. The job output must also correspond to the printer sheet size to be compatible with the printer. Other printer options may also be included in the System Printer Table.

After reading in the System Printer Table, the method of Fig. 2 then compiles a Job Printer Table, step 53, as shown in Fig. 4. Each entry in the Job Printer Table provides information on the workload for each printer on the network. Each entry of the Job Printer Table includes: an estimated time required for a printer to print a queue of jobs awaiting printing at that printer; an estimated time until the output of the job at the workstation is printed at that printer; and the location of the printer. Furthermore, the Job Printer Table is compiled according to a ranking hierarchy so that the printers of the LAN are listed in the Job Printers Table in a preferred order of printing priority. The topmost entry is the preferred printer.

The estimated time for a printer 23A to print a queue of jobs (the job queue time) is determined from the printer's speed and the job queue length at the printer. The job queue time is the waiting time required at that printer before the output of a new job may begin printing. The intelligent printer router queries the printer to determine the job queue length at the printer. The printer speed is determined by reading the "speed" field D of the System Printer Table (Fig. 3) for the printer. Based upon the length of the job queue and the speed of the printer, the method determines the amount of time required for the printer to print the entire job queue, and stores the determined time in the "Job Queue Time" field, column G, of the Job Print Table.

The estimated time required until the output of a job is printed at a printer (the job print time) is determined from the job queue time and the time required to print the job itself. The time required to print the job itself at the printer is estimated based upon the length of the job (as determined from the file page/image data), and the printer speed (as determined from the "speed" field D of the System Printer Table of Fig. 3). The job print time is calculated by summing the job queue time and the time required to print the job itself. The calculated job print time is then stored in the "Estimated Time to Complete Printing" field of the Job Print Table, column H.

The location of each printer is read from the "location" field C of the System Printer Table of Fig. 3. The location of the printer is then stored in the "Printer Location" field, column F, in the Job Printer Table.

The printers listed in the Job Printer Table are ranked according to various criteria during compilation of the Job Printer Table. The criteria for determining the rank order of the printers to produce a list of optimal printers is set by the system administrator by default, however, the workstation user may set up alternate ranking criteria if the user so desires.

In one embodiment the printers are ranked according to four criteria: first, the printers are ranked according to compatibility with the output datastream of the job to be printed; second, the printers are further ranked according to whether the printers are located in the same building as the desired printing location; third, the printers are still further ranked according to an estimated relative speed of completion of printing the job; and fourth, the printers are finally ranked according to the relative proximity of the printers to the desired printing location. The lowest ranked printers are those printers that are not compatible with the output datastream of the job to be printed. The next lowest ranked printers are those printers not located in the same building as the desired printer location. The optimum printers are those that are relatively close to the desired printing location that have the fastest estimated time of completion of the printing job.

The compatibility of each printer with the output datastream of the job is determined by comparing the printer options of the printer from the System Printer Table with the file-type data of the job. If the printer options of the printer are set so that the output datastream, as determined from the file-type data, may be accepted by the printer, then the printer is compatible with the job output. If the output datastream cannot be accepted by the printer then the printer is incompatible with the job output.

The location of each printer is determined from the entry field F of the Job Printer Table of Fig. 4. The estimated time required for completion of printing the job is determined from the entry field H of the Job Printer Table of Fig. 4. The determination of whether a printer is located in proximity (including the same building) to the desired printing location is made by comparing the printer location with the workstation location (provided in either step 43 or step 49). For example, the printer location code "WL2023A" may indicate (from left to right of the location code) that the printer is located at the WL facility, on the second floor, in the twenty third office (or group of offices), in building A. The workstation location may be "WL2018A", indicating that the workstation is on the same floor of the same building as the printer, in the eighteenth office.

After completion of the Job Print Table, the method then displays a list of optimal printers to the workstation user, step 55. The list includes the "n" closest printers to the desired location with the shortest wait and the fastest estimated time of print completion, where the user may select the value for "n". In the event that the user does not select a value for "n", the system administrator provides a default value for "n". The list is derived from the Job Print Table, and the display 17 shows the fields of the Job Print Table for the top "n" ranked printers: the location of the printer; the job queue time (shortest wait); and the estimated job print time (fastest estimate time of print completion).

The workstation user selects a printer from the list of optimal printers to print the job using an input device (such as the keyboard 19). The method receives the printer selection, step 37. The job is then sent to the printer, step 39, and the method terminates, step 41.

The foregoing disclosure and the showings made in the drawings are merely illustrative of the principles of this invention and are not to be interpreted in a limiting sense.

## Claims

1. A method of providing a selection of optimal printing units from a plurality of printing units, said plurality of printing units being interconnected in a network with a data processing system, comprising the steps of:
a) determining a location of said data processing system;
b) determining a relative proximity of each of said printing units to said location of said data processing system;
c) for each of said printing units, determining a projected time of completion for printing a job;
d) providing to an interface on said network a list of said printing units for printing said job, said list comprising said determined relative proximity and said determined time for printing said job for each printing unit.

2. The method of claim 1, wherein the step of determining a projected time of completion for printing further comprises the steps of:
a) determining a rate of printing for each of said printing units;
b) determining a time required to complete printing of a queue of existing jobs at each of said printing units;
c) determining said projected time of completion for providing for each of said printing units from said respective rate of printing and from said respective time required to complete printing of said queue.

3. The method of claim 1 or 2, further comprising the step of, before providing said list to said interface, ranking said printing units according to predetermined criteria.

4. The method of claim 3 wherein said step of ranking said printing units according to said predetermined criteria further comprises the step of ranking said printing units according to said determined proximities of said printing units.

5. The method of claim 3 wherein said step of ranking said printing units according to said predetermined criteria further comprises the step of ranking said printing units according to said determined projected times of completion.

6. The method of claim 1, further comprising the step of after providing said list, sending said job to one of said printing units that is selected by a user for printing.

7. The method of claim 1, further comprising the step of, after determining said location of said data processing system, determining which printing units of said plurality of printing units are capable of printing said job located on a data processing system.

8. The method of claim 1 wherein said step of determining a location of said data processing system further comprises the step of determining said location of said data processing system that originates said job.

9. The method of claim 1 wherein said step of determining a location of said data processing system further comprises the step of receiving an input location from a user.

10. A data processing network, comprising:
a) a plurality of interconnected data processing systems;
b) a plurality of printing units interconnected with said plurality of data processing systems;
c) means for determining a location of one of said data processing systems;
d) means for determining a relative proximity of each of said printing units to said location of said one data processing system;
e) means for determining a projected time of completion of printing a job on each of said printing units; and
f) means for providing to an interface on said network a list of said printing units for printing said job, said list comprising said determined relative proximity and said determined time for printing said job for each printing unit.

11. The data processing network of claim 10, wherein said means of determining a projected time of completion of printing a job further comprises:
a) means for determining a rate of printing for each of said printing units;
b) means for determining a time required to complete printing of a queue of existing jobs at each of said printing units;
c) means for determining said projected time of completion for providing for each of said printing units from said respective rate of printing and from said respective time required to complete printing of said queue.

12. The data processing network of claim 10 or 11, further comprising means for sending output of a job to one of said printing units that is selected by a user.

13. The data processing network of any of the claims 10 to 12, further comprising means for determining compatibility of said printing units with said job.
